# FASCICULE DE BREVET EUROPEEN

(11) **EP 1 000 906 B1**
(45) Date de publication et mention de la délivrance du brevet: **27.04.2005**
(21) Numéro de dépôt: 99402825.6
(22) Date de dépôt: 15.11.1999
(51) Int. Cl.: C03B 32/00, C03B 29/02

(54) **Etuve pour détecter des inclusions de sulfures de nickel dans des vitrages**
Ofen zum Aufspüren von Nickelsulfideinschlüssen in Glasscheiben
Furnace for detecting inclusions of nickelsulfide in glass sheets

(30) Priorité: 16.11.1998 FR 9814341
(43) Date de publication de la demande: 17.05.2000
(73) Titulaire: SAINT-GOBAIN GLASS FRANCE, 92400 Courbevoie (FR)
(72) Inventeur: Demars, Yves, 60600 Clermont (FR); Elluin, Jean-Christophe, 60750 Choisy au Bac (FR); Poix, René, 60400 Noyon (FR)
(74) Mandataire: Le Cam, Stéphane Georges Elie

(56) Documents cités:
- FR-A- 2 060 405

## Description

La présente invention concerne une étuve pour détecter la présence d'inclusions de sulfures de nickel dans des vitrages sortant d'un four et pour détruire les vitrages qui en contiennent.

On sait aujourd'hui que des sulfures de nickel sont présents dans les vitrages sous la forme de billes cristallines. Bien que ces billes ne nuisent pas aux principales propriétés recherchées des vitrages, elles conduisent tout de même à un problème important dans le cas notamment des feuilles de verre trempées. En effet, la présence de ces inclusions de sulfures de nickel conduit à des casses dites spontanées des feuilles de verre trempées bien après leur réalisation. Certains cas recensés ont montré une casse d'une telle feuille de verre trempée plus de dix années après sa fabrication. Cet inconvénient est lourd de conséquences puisque les feuilles de verre ont bien entendu déjà été vendues puis utilisées. Lorsque ce type de vitrage est utilisé notamment pour l'habillage extérieur de façades de bâtiment, une casse des vitrages après leur installation peut conduire à de graves accidents causés par leur chute depuis les façades ou bien depuis des toits vitrés couvrant des passages pour piétons.

La détection de ces inclusions dans le verre est donc nécessaire notamment dans le cas des vitrages trempés.

On sait par ailleurs que les différentes compositions de sulfure de nickel à la source de ces problèmes sont le sulfure de nickel stoechiométriques NiS, le Ni₇S₆ et des sulfures de nickel sous-stoechiométriques en nickel NiS_{1+X} avec x variant de 0 à 0,08. Ces différentes compositions sont présentes dans les vitrages sous deux formes cristallines : la forme α (forme hexagonale) qui est stable au-dessus de 330°C et la phase β (phase rhomboédrique) qui est stable en dessous de 330°C.

Les diamètres pénalisants des billes sont essentiellement compris entre 40 µm et 0,1 mm.

Le phénomène qualifié précédemment de casse spontanée différée dans le temps est dû à la dilatation d'environ 4% en volume qui accompagne la transformation de la phase haute température α vers la phase basse température β. La phase α est métastable à température ambiante tandis que la phase β est stable à température ambiante. Il est ainsi compréhensible que si des sulfures de nickel existent dans leur phase α au sein de feuilles de verre prêtes à être utilisées ou déjà utilisées, des transformations vers la phase β peuvent apparaître au cours du temps.

La présence de sulfures de nickel dans leur phase α au sein de feuilles de verre à température ambiante s'explique, notamment dans le cas de feuilles de verre trempées, par le traitement thermique qu'elles ont subi. En effet, dans le cas d'une trempe thermique, l'élévation de température de la feuille de verre peut conduire à l'apparition de la phase α si des sulfures de nickel sont présents. Le refroidissement rapide qui suit la trempe ne permet pas, du fait de sa vitesse, un retour complet vers la phase β. Les feuilles de verre ainsi traitées peuvent donc comporter des sulfures de nickel en phase α qui vont se transformer dans le temps en phase β, ladite transformation s'accompagnant d'une augmentation de volume pouvant générer une casse des feuilles de verre.

Des procédés de détection des sulfures de nickel sont déjà connus dans l'art intérieur. Un premier procédé consiste à repérer à l'aide d'un polariscope les contraintes particulières générées autour des billes de sulfures de nickel. Un tel procédé est délicat à mettre en oeuvre et inévitablement d'une durée très importante, ce qui augmente considérablement les coûts de production.

Un autre type de procédé, habituellement appelé Heat Soak Test ", consiste à accélérer la transformation de la phase α vers la phase β de façon à la rendre plus rapide que celle qui se fait à la température ambiante. Il a déjà été mis en évidence en effet que la vitesse de transformation est fonction de la température et qu'elle augmente avec la température. Toutefois, la température optimale pour obtenir une vitesse la plus rapide possible de ladite transformation est définie par la limite supérieure de stabilité de la phase β pour toutes les compositions de sulfure de nickel responsables des casses. Cette température est égale à 282°C.

Ce procédé consiste à placer les feuilles de verre dans une étuve atmosphérique et à les soumettre à un traitement thermique en trois étapes dont la durée totale comprise entre huit et quinze heures. La première étape consiste à élever la température des vitrages depuis une température ambiante de stockage, habituellement comprise entre 20 et 50°C, jusqu'à la température de détection que l'on choisit avantageusement égale à ladite température optimale de 282°C. Cette première étape de montée en température est relativement lente pour éviter tout risque de choc thermique. La seconde étape consiste en un palier à une température de l'ordre de 282°C. La durée de ce palier est d'au moins trois heures. La dernière étape consiste à refroidir les vitrages.

Au terme de la seconde phase, la transformation vers la phase β qui est stable à température ambiante s'est opérée pour les sulfures de nickel présents dans les vitrages et a conduit à la destruction des vitrages qui contiennent des sulfures de nickel dans la phase α au moment de leur introduction dans l'étuve. Un tel procédé de détection est satisfaisant car il permet d'éliminer les vitrages qui auraient conduit ultérieurement à une casse due à la présence de sulfures de nickel.

On connaît dans la technique antérieure une étuve pour la mise en oeuvre du procédé " Heat Soak Test ". Cette étuve comprend une enceinte dans laquelle sont montés une pluralité de tiroirs horizontaux superposés pouvant coulisser entre une position rentrée à l'intérieur de l'enceinte et une position sortie à l'extérieur de l'enceinte, chaque tiroir recevant dans sa position sortie un vitrage posé à plat. Une telle étuve convient pour le traitement des vitrages de faibles dimensions mais pas pour les grands vitrages, tels que ceux qui sont produits à échelle industrielle pour le bâtiment. En effet, ces vitrages sont disposés, dès leur sortie du four, en position verticale sur des pupitres et pour les poser sur les tiroirs, il faudrait les basculer jusqu'à la position horizontale, ce qui peut entraîner un risque de rayage ou de casse.

Le EP-A-0940372 enseigne une installation pour heat soak test de feuilles de verre, comprenant une chambre à l'intérieur de laquelle est posée un chevalet, la section d'admission du flux d'air étant limitée aux dimensions extérieures, du côté du souffiage de l'air, de l'ensemble composé des plaques de verre et du chevalet. Ce document appartient à l'état de la technique telle que définie à l'Article 54(3) CBE.

La présente invention vise à proposer une étuve capable de traiter des vitrages de grandes dimensions.

L'invention concerne également une étuve dans laquelle les vitrages peuvent être introduits dans la position verticale qu'ils occupent sur les pupitres, sans avoir à les coucher en position horizontale.

L'invention concerne encore une étuve qui permet de traiter en bloc un lot de vitrages de dimensions différentes classés dans l'ordre précis dans lequel le client qui les a commandés souhaite les utiliser.

L'invention concerne également une étuve dans laquelle la température optimale définie précédemment peut être maintenue homogène dans tout le volume de l'étuve pendant toute la durée de la seconde phase.

L'invention concerne encore une étuve dans laquelle cette température est atteinte en un temps relativement court afin d'éviter l'apparition de gradients de température dans certaines régions de l'étuve.

Le temps de montée en température doit être calculé pour que la zone la plus froide de l'étuve, qui se trouve à la partie inférieure et du côté de la sortie, arrive à la température optimale de 282°C à laquelle la phase α se transforme en la phase β, sans que le point le plus chaud ne dépasse la température limite de stabilité de la phase β qui est de l'ordre de 300°C.

Toutes ces exigences sont satisfaites grâce à l'étuve selon la revendication 1. Cette étuve est constituée par une enceinte parallélépipédique thermiquement isolée vis-à-vis de l'extérieur et présentant sur une de ses grande faces latérales une ouverture à travers laquelle peut être introduite une charge de vitrages, ladite ouverture étant fermée hermétiquement par une porte thermiquement isolante, l'enceinte étant équipée de moyens de soufflage d'air permettant de faire circuler dans l'enceinte un courant d'air dans une direction parallèle au plan des vitrages, de moyens de chauffage pour chauffer ledit courant d'air et de moyens d'homogénéisation permettant de rendre uniforme la température dans tout l'espace occupé par les vitrages.

L'invention concerne également une étuve selon la revendication 2, constituée par une enceinte parallélépipédique thermiquement isolée vis-à-vis de l'extérieur et présentant sur une de ses faces latérales une ouverture à travers laquelle peut être introduite une charge de vitrages, ladite ouverture étant fermée hermétiquement par une porte thermiquement isolante, pouvant être déplacée dans une position ouverte où elle dégage complètement l'ouverture, l'enceinte étant équipée de moyens de soufflage d'air permettant de faire circuler dans l'enceinte un courant d'air dans une direction parallèle au plan des vitrages, de moyens de chauffage pour chauffer ledit courant d'air et de moyens d'homogénéisation permettant de rendre uniforme la température dans tout l'espace occupé par les vitrages.

De préférence, le courant d'air est soufflé entre les vitrages dans une direction horizontale. Cette direction est préférée à la direction verticale car les bris de verre peuvent ainsi être entraînés hors de la zone des vitrages alors qu'avec un soufflage dans le sens vertical il peut se former des tourbillons de poussière de verre entre les vitrages.

L'enceinte comprend un plancher isolé par rapport au sol, deux parois latérales, une paroi arrière de grande surface, un plafond et une face de grande surface entièrement ouverte afin de livrer le plus grand espace pour l'introduction de la charge de vitrages.

Lesdits moyens de soufflage de l'air sont constitués par un ventilateur haute pression monté dans une chambre supérieure comprise entre le plafond et un faux-plafond et qui communique avec deux chambres latérales situées de part et d'autre de la charge de vitrages.

On obtient une distribution homogène de l'air et un bon échange thermique avec les vitrages en faisant circuler l'air à faible vitesse entre les vitrages. On peut à cet effet, disposer de part et d'autre de la zone occupée par les vitrages des moyens introduisant une perte de charge élevée sur le trajet du courant dans ladite zone, par exemple deux plaques perforées verticales de même surface que la section d'entrée de ladite zone.

Pour réduire les pertes thermiques, on donnera à l'enceinte ainsi qu'à la chambre supérieure une largeur légèrement supérieure à la largeur de la charge de vitrages, et au ventilateur un diamètre légèrement inférieur à la largeur de l'enceinte. Le flux d'air soufflé par le ventilateur emplit de ce fait toute la section de la chambre supérieure et des chambres latérales.

Ce mode de soufflage à sens unique présente l'inconvénient que les portions de vitrages situées du côté de l'entrée du courant d'air sont portées plus rapidement à la température optimum que les portions de vitrages se trouvant du côté de la sortie du courant d'air.

Pour éviter cela, les inventeurs ont imaginé de faire souffler l'air à travers la charge de vitrages, alternativement dans un sens puis dans l'autre. Dans ce cas, des moyens de chauffage distincts seront logés dans la chambre supérieure de part et d'autre du ventilateur, afin de chauffer l'air dès sa sortie du ventilateur. On choisira de préférence des moyens de chauffage au gaz combinés avec des moyens de chauffage d'appoint à l'électricité.

La capacité de traitement de l'étuve peut être augmentée en juxtaposant deux ou plusieurs tranches d'étuves, la tranche arrière étant pourvue d'une paroi arrière, la tranche d'entrée étant pourvue d'une porte et les tranches intermédiaires étant de forme annulaire sans paroi arrière ni porte.

Une prise d'air est prévue dans le plafond de l'enceinte pour refroidir l'étuve à la fin du cycle de traitement.

Un exemple de réalisation de l'invention sera décrit à présent en regard des dessins annexés dans lesquels :
la figure 1 est une vue en coupe de l'étuve selon le plan vertical I-I de la figure 2 ;
la figure 2 est une vue en coupe de l'étuve selon le plan horizontal II-II de la figure 1 ;
la figure 3 est une vue en coupe de l'étuve selon le plan vertical III-III de la figure 1 ;
la figure 4 est une vue en élévation partielle, depuis l'extérieur de l'étuve, de l'embiellage de transmission de mouvements aux volets ; et
la figure 5 illustre le procédé de traitement réalisé au moyen de l'étuve de l'invention.

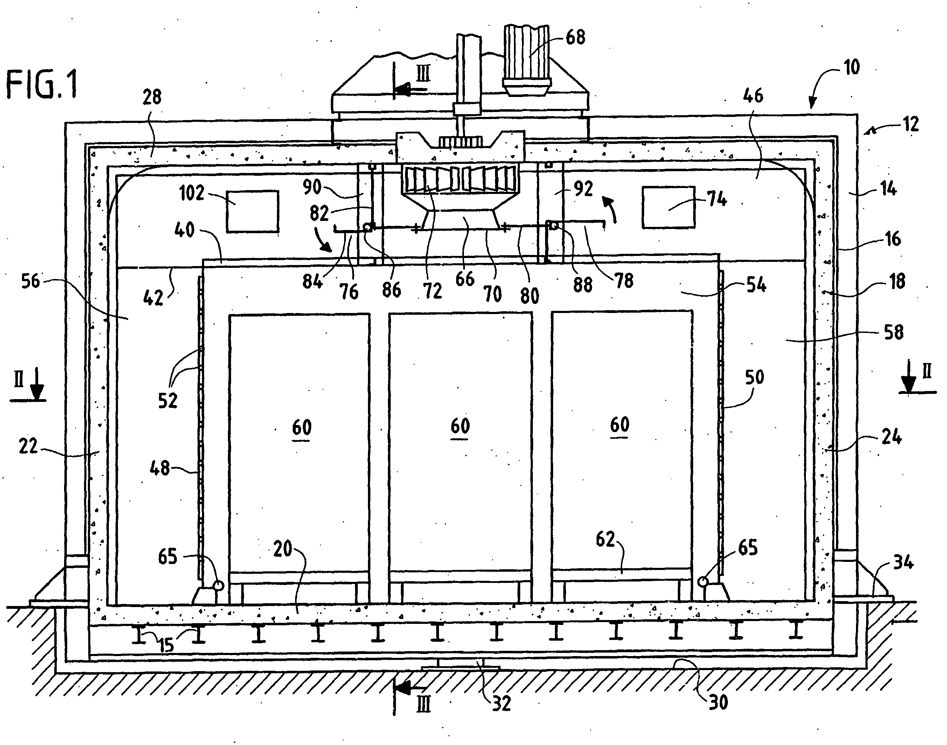

L'étuve 10 représentée sur les figures 1 à 4 comprend une enceinte formée d'une structure métallique 12 de forme parallélépipédique réalisée à partir de poutres métalliques 14 et de traverses 15 sur lesquelles sont fixées des tôles 16 qui sont revêtues intérieurement d'une couche relativement épaisse de matière isolante 18.

L'enceinte comprend un plancher 20, deux parois latérales 22, 24, une paroi arrière 26 et un plafond horizontal 28 ayant tous la structure décrite ci-dessus. On assure ainsi l'isolation de l'enceinte vis-à-vis de l'extérieur et on évite les ponts thermiques sur la structure métallique.

L'enceinte est montée dans une fosse 30 et son plancher 20 est maintenu écarté du fond de la fosse par des appuis isolants 32 et par des équerres 34 prenant appui sur le bord de la fosse. On rend ainsi négligeables les pertes de chaleur à travers le fond de l'étuve.

L'enceinte est ouverte sur toute sa face avant et son ouverture 36 peut être fermée par une porte thermiquement isolante 38. Des moyens d'étanchéité sont prévus tout le long du contour de la porte afin de prévenir toute fuite.

La porte peut être déplacée de sa position fermée à une position ouverte où elle dégage complètement l'ouverture 36. Elle peut par exemple être relevée au-dessus de l'enceinte à la manière d'une porte de garage.

L'enceinte comporte à sa partie supérieure un faux-plafond 40 pourvu au voisinage des deux parois latérales 22, 24 de deux ouvertures 42, 44 qui font communiquer la gaine 46 qui se trouve au-dessus du faux-plafond avec la zone qui se trouve sous le faux-plafond.

A l'aplomb des ouvertures 42, 44 sont dressées deux plaques verticales 48, 50 percées sur toutes leur surface de perforations 52 uniformément réparties. Le faux-plafond 40 et les plaques perforées 48, 50 définissent entre elles une vaste zone centrale 54 destinée à recevoir les vitrages. A l'extérieur des plaques perforées se trouvent deux chambres latérales 56, 58 qui communiquent avec la gaine 46 par les ouvertures 42, 44.

A l'extérieur de l'étuve on prépare une charge de vitrages à traiter. Cette charge correspond par exemple à une commande faite par un client. Elle comprend une certaine quantité de vitrages 60 qui peuvent avoir des dimensions différentes et qui doivent être classés dans l'ordre où ils seront utilisés par le client. Les vitrages sont posés sur un ou plusieurs pupitres 62 en position sensiblement verticale et sont maintenus écartés l'un de l'autre par un faible intervalle. Les pupitres sont introduits, au moyen d'un chariot élévateur, à travers l'ouverture 36 de l'enceinte dans une direction frontale, c'est-à-dire perpendiculaire au plan des vitrages.

Des butées arrière 64 sont prévues pour positionner les pupitres au centre de la zone centrale 54 en ménageant un espace libre à l'arrière de la charge. Un second jeu de butées 65 est prévu pour limiter la course des chariots avant qu'ils ne heurtent le bord de l'ouverture de l'étuve.

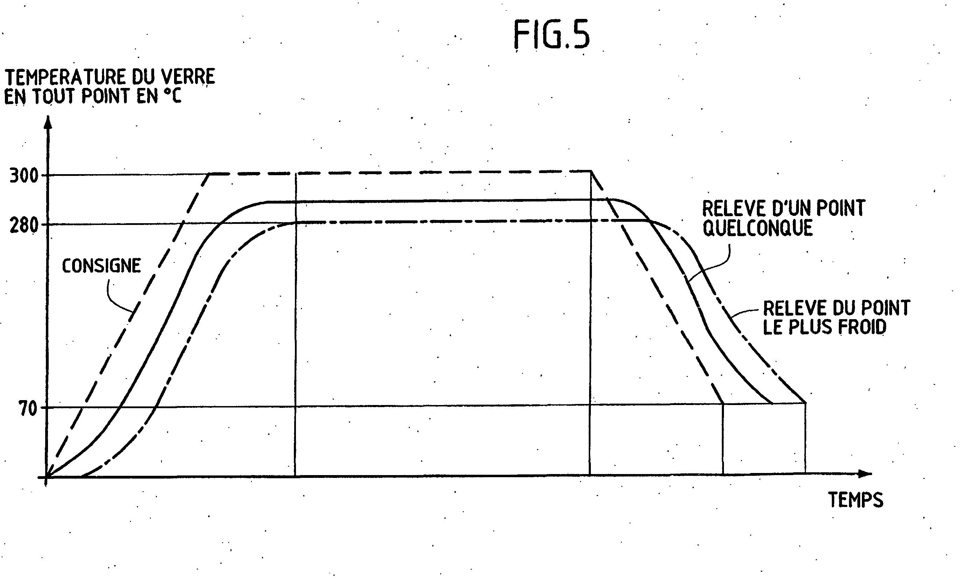

L'étuve peut recevoir de grands vitrages pouvant avoir des dimensions légèrement inférieures à celles de la zone centrale 54. Ces vitrages sont soumis à un procédé thermique tel qu'illustré par la figure 5. Celle-ci montre en traits tiretés une courbe de température dite de consigne qui comprend une phase de chauffage au cours de laquelle la température augmente linéairement depuis la température ambiante jusqu'à une température optimale de 300°C, un palier où la température est maintenue constante à ladite valeur optimale et une phase de refroidissement où la température est ramenée linéairement à la température ambiante.

Pour réaliser ce cycle de température, on utilise des moyens de soufflage d'air combinés avec des moyens de chauffage de l'air, sous le contrôle de moyens de commande.

Les moyens de soufflage de l'air sont constitués par un ventilateur haute pression 66 d'axe vertical fixé dans le plafond 28 de l'enceinte. Le ventilateur est entraîné par un moteur 68 monté à l'extérieur de l'enceinte. L'ouverture d'aspiration 70 du ventilateur débouche dans la gaine 46 à une certaine distance du faux-plafond, tandis que son ouverture de soufflage 72 se trouve près du plafond.

Du côté où l'air est soufflé, c'est-à-dire à droite sur la figure 1, est monté un moyen de chauffage 74, de préférence au gaz, auquel peut être adjoint un moyen de chauffage d'appoint à l'électricité. Le moyen de chauffage peut également être exclusivement à l'électricité.

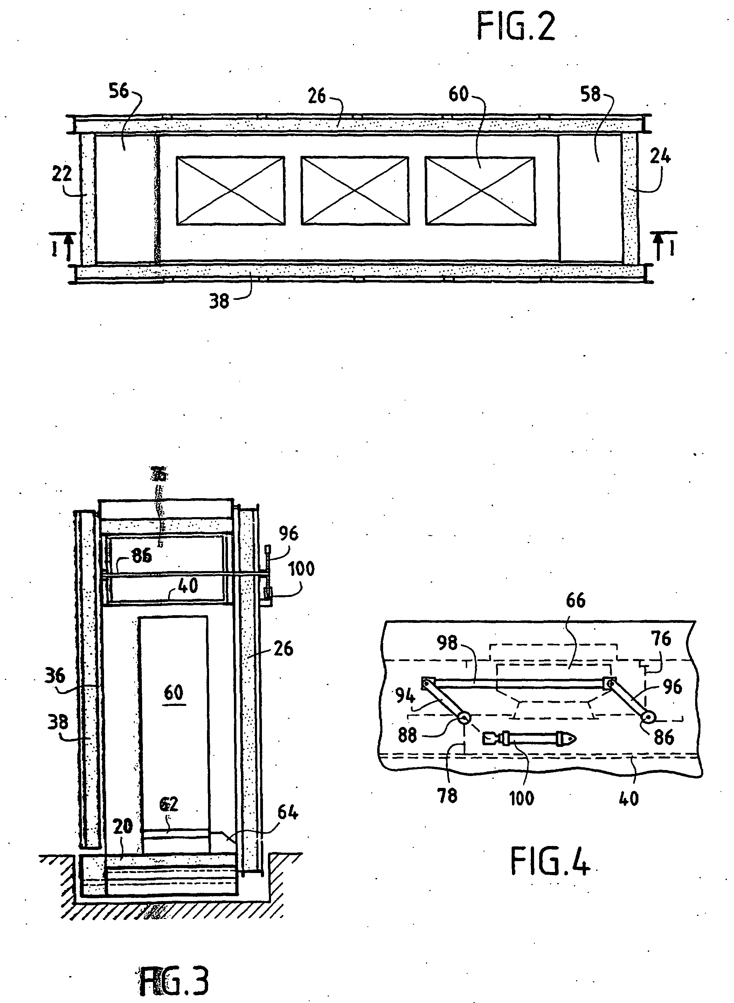

Comme on peut le voir sur la figure 3, le ventilateur 66 a des dimensions sensiblement égales à celles de la gaine. Le flux d'air soufflé occupe de ce fait toute la section de la gaine. Il en résulte que lorsque le ventilateur est mis en marche, un flux d'air chaud emplit toute la section de la gaine. Il s'établit alors à l'intérieur de l'étuve une circulation d'air chaud dans le sens des aiguilles d'une montre sur la figure 1. L'air soufflé par le ventilateur traverse le moyen de chauffage 74 où il est réchauffé, chemine dans la gaine 46 et de là dans la chambre latérale 58. L'air traverse ensuite la plaque perforée 50 dans une direction horizontale parallèle au plan des vitrages 60. La plaque perforée introduit une forte perte de charge de sorte que l'air est ralenti et se répartit uniformément sur toute la section d'entrée de la zone centrale 54 où se trouvent les vitrages. Le flux d'air passe ensuite entre les vitrages avec lesquels il échange de la chaleur sur toute leur surface.

L'air traverse ensuite la plaque perforée 48, remonte le long de la chambre latérale 56 et gagne la gaine où elle est aspirée à travers l'orifice 70 du ventilateur.

Toutefois, ce mode de circulation à sens unique favorise les portions de vitrage situées du côté droit de la zone 54 par rapport aux portions se trouvant à gauche car elles seront portées plus rapidement à la température de consigne. La durée du traitement devra de ce fait être prolongée jusqu'à ce que toutes les parties des vitrages soient portées à la température de consigne.

On remédie à cet inconvénient en faisant circuler l'air dans des sens alternés. La figure 1 montre un exemple de dispositif qui permet d'obtenir ce résultat. Ce dispositif comprend deux volets coudés pivotants 76, 78 disposés de part et d'autre du ventilateur. Ces volets sont animés de mouvements alternatifs et en opposition de phase, comme on l'expliquera en détail par la suite. Les volets 76, 78 sont constitués chacun par une tôle rectangulaire pliée à 90° dont la largeur est sensiblement égale à celle de la gaine. D'autre part, le ventilateur porte autour de son ouverture d'aspiration 70, une plaque annulaire 80 ayant une forme extérieure rectangulaire qui s'insère exactement dans la gaine 46. La plaque est parallèle au plafond et au faux-plafond et est comprise entre eux.

La longueur de l'un des bras 82 des volets est égale à la distance entre le plafond 28 et la plaque annulaire 80 tandis que la longueur de l'autre bras 84 est égale à la distance entre la plaque annulaire et le taux plafond 40.

Les volets sont articulés autour de leur coude sur des axes 86, 88 portés par des poutres supports 90, 92 au même niveau que la plaque annulaire et au voisinage immédiat du bord de cette dernière.

Comme le montrent les figures 3 et 4, à une des extrémités des axes 86, 88 qui est située à l'extérieur de l'étuve sont fixées respectivement deux tiges 94, 96 de même longueur. Ces tiges sont parallèles lorsque les volets 76, 78 occupent la position montrée sur la figure 4. Dans cette position, le bras vertical du volet 76 obture le passage situé au-dessous de la plaque annulaire et son bras vertical libère le passage situé au-dessous de la plaque annulaire. Les bras du volet 78 ont des positions inversées par rapport aux bras du volet 76.

Les extrémités des tiges 94, 96 sont reliées par une bielle 98. Un vérin à double effet 100 entraîne l'ensemble des tiges, de la bielle et des volets en mouvement de rotation d'amplitude angulaire égale à 90°, alternativement dans les deux sens.

Ainsi, lorsque les volets sont la position représentée à la figure 1. l'air soufflé par le ventilateur ne peut s'écouler que vers la droite à travers le passage ouvert défini entre le bras horizontal du volet 78 et le plafond, mais pas vers la gauche puisque le bras vertical du volet 76 obture le passage vers cette direction. Par contre, le ventilateur aspire l'air à travers le passage ouvert formé entre le bras horizontal du volet 76 et le faux-plafond 40 mais pas l'air qui se trouve du côté droit étant donné que le bras vertical du volet 78 obture la communication avec ce côté. Il s'établit donc une circulation de l'air dans le sens de aiguilles d'une montre à l'intérieur de l'étuve.

Au bout d'un temps prédéterminé, le vérin 100 fait pivoter de façon synchrone les deux volets de 90° autour de leur axe respectif, dans le sens inverse des aiguilles d'une montre, comme indiqué par les flèches sur la figure 1. Il en résulte que le sens de circulation de l'air s'inverse.

Pour pouvoir réchauffer l'air qui est soufflé vers la gauche sur la figure 1, on prévoit de monter à l'intérieur de la gaine, du côté gauche, de seconds moyens de chauffage 102.

L'étuve comprend encore une prise d'air frais, non représentée, pour refroidir l'enceinte à la fin du cycle de traitement.

Il est possible de traiter un plus grand nombre de vitrages en utilisant une étuve à plusieurs tranches accolées, comprenant une tranche arrière avec paroi arrière et sans porte, une ou plusieurs tranches intermédiaires sans porte ni paroi arrière et une tranche avant sans paroi arrière mais pourvue d'une porte. Les tranches sont accolées le long de leur bord avec interposition de joints d'étanchéité.

On donnera ci-après un exemple pratique d'étuve réalisée par la Déposante.

On utilise un ventilateur ayant une puissance de 50 à 75 kW et un groupe de chauffage de 500 kW. La pression du ventilateur est réglée de 200 à 400 mm de colonne d'eau.

La phase de montée en température et la phase de descente en température s'effectuent en un temps relativement court ne dépassant pas 1,5 heure pour chacune de ces phases. Le cycle complet de traitement dure 4 heures. La température du palier est comprise entre 270 et 300°C comme représenté sur la figure 5.

Chaque enceinte peut contenir jusqu'à 6 tonnes de verre.

La vitesse de l'air entre les vitrages est comprise entre 1 et 3 m/s.

Les vitrages traités ont des épaisseurs variant entre 4,6 et 19 mm et sont espacés de 20 mm.

Le pourcentage des perforations sur les plaques est compris entre 40 et 80%, et avantageusement égal à environ 60% de trous.

## Revendications

1. Etuve pour le traitement de vitrages (60), lesdits vitrages étant posés à peu près verticalement sur des moyens supports (62) et espacés entre eux par un faible écartement, ladite étuve étant constituée par une enceinte parallélépipédique (12) thermiquement isolée vis- à-vis de l'extérieur et présentant sur une de ses grandes faces latérales, une ouverture (36) à travers laquelle peut être introduite une charge de vitrages (60), ladite ouverture étant fermée hermétiquement par une porte thermiquement isolante (38), l'enceinte étant équipée de moyens de soufflage d'air (66) permettant de faire circuler dans l'enceinte un courant d'air dans une direction parallèle au plan des vitrages, de moyens de chauffage (74, 102) pour chauffer ledit courant d'air et de moyens d'homogénéisation (48, 50) permettant de rendre uniforme la température dans tout l'espace occupé par les vitrages.

2. Etuve pour le traitement de vitrages (60), lesdits vitrages étant posés à peu près verticalement sur des moyens supports (62) et espacés entre eux par un faible écartement, ladite étuve étant constituée par une enceinte parallélépipédique (12) thermiquement isolée vis- à-vis de l'extérieur et présentant sur une de ses faces latérales, une ouverture (36) à travers laquelle peut être introduite une charge de vitrages (60), ladite ouverture étant fermée hermétiquement par une porte thermiquement isolante (38) pouvant être déplacée dans une position ouverte où elle dégage complètement l'ouverture (36), l'enceinte étant équipée de moyens de soufflage d'air (66) permettant de faire circuler dans l'enceinte un courant d'air dans une direction parallèle au plan des vitrages, de moyens de chauffage (74, 102) pour chauffer ledit courant d'air et de moyens d'homogénéisation (48, 50) permettant de rendre uniforme la température dans tout l'espace occupé par les vitrages.

3. Etuve selon la revendication 1, **caractérisée en ce que** la porte thermiquement isolante (38) peut être déplacée dans une position ouverte où elle dégage complètement l'ouverture (36).

4. Etuve selon l'une des revendications précédentes, **caractérisée en ce que** l'air est soufflé entre les vitrages dans une direction horizontale.

5. Etuve selon l'une des revendications précédentes, **caractérisée en ce que** lesdits moyens de soufflage sont constitués par un ventilateur haute pression (66).

6. Etuve selon l'une des revendications précédentes, **caractérisée en ce que** l'enceinte comprend un plancher (20) isolé par rapport au sol, deux parois latérales (22, 24), une paroi arrière (26) de grande surface, un plafond (28) et une face avant de grande surface entièrement ouverte afin de livrer le plus grand espace pour l'introduction de la charge de vitrages.

7. Etuve selon l'une des revendications précédentes, **caractérisée en ce que** les moyens de soufflage (66) et les moyens de chauffage (74, 102) sont montés dans une chambre supérieure (46) située au-dessus d'un faux-plafond (40) et qui communique avec deux chambres latérales (56, 58) situées de part et d'autre de la charge de vitrages (60), du côté des bords verticaux de ces derniers.

8. Etuve selon la revendication précédente, **caractérisée en ce que** de part et d'autre de la zone occupée par les vitrages sont prévus des moyens destinés à introduire une perte de charge élevée sur le trajet du courant d'air horizontal avant qu'il pénètre dans ladite zone.

9. Etuve selon la revendication précédente, **caractérisée en ce que** lesdits moyens sont constitués par deux plaques perforées (48, 50) disposées verticalement de part et d'autre de la charge de vitrages.

10. Etuve selon l'une des revendications précédentes, **caractérisée en ce que** l'enceinte ainsi que la chambre supérieure (46) située au-dessus du faux-plafond (40) ont une largeur légèrement supérieure à la largeur de la charge de vitrages, et **en ce que** le ventilateur a un diamètre sensiblement égal à la largeur intérieure de l'enceinte.

11. Etuve selon l'une des revendications précédentes, **caractérisée en ce qu'**il comporte un dispositif permettant de faire circuler le flux d'air soufflé par le ventilateur alternativement dans un sens puis dans l'autre.

12. Etuve selon la revendication précédente, **caractérisée en ce que** ledit dispositif comprend :
- une plaque annulaire (80) adaptée autour de l'orifice d'aspiration (70) du ventilateur parallèlement au plafond et au faux-plafond (40) ;
- et deux volets coudés (76, 78) montés pivotants autour de leur coude sur des axes horizontaux (86, 88) fixés dans la chambre supérieure (46) de part et d'autre du ventilateur près des bords de la plaque annulaire, lesdits volets pouvant être entraînés en rotation d'une position où l'un de leurs bras coopère avec la plaque annulaire pour fermer le passage de l'air du ventilateur pendant que l'autre bras libère l'ouverture d'aspiration (70) du ventilateur, et vice-versa, les deux volets étant montés en opposition de phase.

13. Etuve selon l'une des deux revendications précédentes, **caractérisée en ce que** dans l'espace (46) compris entre le plafond et le faux-plafond sont montés de premiers (74) et de seconds (102) moyens de chauffage disposés de part et d'autre du ventilateur.

14. Etuve selon la revendication précédente, **caractérisée en ce que** lesdits moyens de chauffage comprennent des moyens de chauffage au gaz et/ou des moyens de chauffage d'appoint à l'électricité.

15. Etuve selon l'une des revendications précédentes, **caractérisée en ce que** les parois de l'enceinte et la porte sont revêtues intérieurement d'une couche de matière thermiquement isolante.

16. Etuve selon l'une des revendications précédentes, **caractérisée en ce qu'**elle comporte une prise d'air pour le refroidissement de l'enceinte.

17. Etuve selon l'une des revendications précédentes, **caractérisée en ce que** plusieurs tranches d'étuves peuvent êtres juxtaposées, à savoir une tranche arrière avec paroi arrière et sans porte, une tranche avant avec une porte et sans paroi arrière et des tranches intermédiaires sans paroi arrière ni porte.

18. Application de l'étuve selon l'une quelconque des revendications précédentes à la détection et à la destruction de vitrages contenant des inclusions de sulfure de nickel.

## Patentansprüche

1. Ofen für die Behandlung von Glasscheiben (60), die etwa vertikal auf Tragmitteln (62) angeordnet und voneinander mit einer geringen Entfernung beabstandet sind, welcher aus einer parallelepipedischen Hülle (12) besteht, die gegenüber der Außenwelt wärmeisoliert ist und in einer ihrer großen Seitenwände eine Öffnung (36) aufweist, durch welche eine Charge aus Glasscheiben (60) beschickt werden kann und welche hermetisch mit einer wärmeisolierten Tür (38) verschlossen ist, wobei die Hülle mit Mitteln (66) zum Einblasen von Luft, die es erlauben, in ihr einen Luftstrom in einer zur Ebene der Glasscheiben parallelen Richtung strömen zu lassen, mit Mitteln (74, 102) zum Erwärmen des Luftstroms und mit Homogenisierungsmitteln (48, 50), die es erlauben, die Temperatur an jeder von den Glasscheiben eingenommenen Stelle gleichmäßig zu machen, ausgestattet ist.

2. Ofen für die Behandlung von Glasscheiben (60), die etwa vertikal auf Tragmitteln (62) angeordnet und voneinander mit einer geringen Entfernung beabstandet sind, welcher aus einer parallelepipedischen Hülle (12) besteht, die gegenüber der Außenwelt wärmeisoliert ist und in einer ihrer großen Seitenwände eine Öffnung (36) aufweist, durch welche eine Charge aus Glasscheiben (60) beschickt werden kann und welche hermetisch mit einer wärmeisolierten Tür (38) verschlossen ist, die in eine geöffnete Position bewegt werden kann, in welcher sie die Öffnung (36) vollständig freigibt, wobei die Hülle mit Mitteln (66) zum Einblasen von Luft, die es erlauben, in ihr einen Luftstrom in einer zur Ebene der Glasscheiben parallelen Richtung strömen zu lassen, mit Mitteln (74, 102) zum Erwärmen des Luftstroms und mit Homogenisierungsmitteln (48, 50), die es erlauben, die Temperatur an jeder von den Glasscheiben eingenommenen Stelle gleichmäßig zu machen, ausgestattet ist.

3. Ofen nach Anspruch 1, **dadurch gekennzeichnet, dass** die wärmeisolierte Tür (38) in eine geöffnete Position bewegt werden kann, in welcher sie die Öffnung (36) vollständig freigibt.

4. Ofen nach einem der vorhergehenden Ansprüche, **dadurch gekennzeichnet, dass** die Luft in horizontaler Richtung zwischen die Glasscheiben geblasen wird.

5. Ofen nach einem der vorhergehenden Ansprüche, **dadurch gekennzeichnet, dass** die Blasmittel aus einem Hochdruckgebläse (66) bestehen.

6. Ofen nach einem der vorhergehenden Ansprüche, **dadurch gekennzeichnet, dass** die Hülle einen gegenüber dem Untergrund isolierten Boden (20), zwei Seitenwände (22, 24), eine große Rückwand (26), eine Decke (28) und eine große Vorderseite, die vollständig offen ist, um für die Beschickung mit der aus Glasscheiben bestehenden Charge den größtmöglichen Platz zu bieten, umfasst.

7. Ofen nach einem der vorhergehenden Ansprüche, **dadurch gekennzeichnet, dass** die Blasmittel (66) und die Beheizungsmittel (74, 102) in einer oberen Kammer (46) angebracht sind, die sich über einer Zwischendecke (40) befindet und mit zwei Seitenkammern (56, 58) in Verbindung steht, die sich auf beiden Seiten der Charge aus Glasscheiben (60) auf der Seite von deren vertikalen Rändern befinden.

8. Ofen nach dem vorhergehenden Anspruch, **dadurch gekennzeichnet, dass** auf beiden Seiten des von den Glasscheiben eingenommenen Bereichs Mittel vorgesehen sind, die dazu bestimmt sind, auf dem Weg des horizontalen Luftstroms, bevor er in diesen Bereich gelangt, einen hohen Druckverlust zu erzeugen.

9. Ofen nach dem vorhergehenden Anspruch, **dadurch gekennzeichnet, dass** die Mittel aus zwei perforierten Platten (48, 50) bestehen, die auf beiden Seiten der Glasscheibencharge vertikal angeordnet sind.

10. Ofen nach einem der vorhergehenden Ansprüche, **dadurch gekennzeichnet, dass** die Hülle sowie die obere Kammer (46), die sich über der Zwischendecke (40) befindet, eine Breite haben, die etwas größer als diejenige der Glasscheibencharge ist, und dass der Durchmesser des Gebläses etwa gleich der Innenbreite der Hülle ist.

11. Ofen nach einem der vorhergehenden Ansprüche, **dadurch gekennzeichnet, dass** er eine Einrichtung umfasst, die es erlaubt, den vom Gebläse erzeugten Luftstrom abwechselnd in eine Richtung und anschließend in die andere strömen zu lassen.

12. Ofen nach dem vorhergehenden Anspruch, **dadurch gekennzeichnet, dass** die Einrichtung
- eine ringförmige Platte (80), die um die Ansaugöffnung (70) des Gebläses parallel zu Decke und Zwischendecke (40) angepasst ist, und
- zwei rechtwinklige Klappen (76, 78), die um ihre Krümmung an horizontalen Achsen (86, 88) schwenkbar angebracht sind, die in der oberen Kammer (46) auf beiden Seiten des Gebläses in der Nähe des Randes der ringförmigen Platte befestigt sind, wobei diese Klappen in Umdrehung von einer Position aus versetzt werden können, in welcher einer ihrer Schenkel mit der ringförmigen Platte zusammenwirkt, um den Durchgang der Luft vom Gebläse zu verschließen, während der andere Schenkel die Ansaugöffnung (70) des Gebläses freigibt, und umgekehrt, wobei die zwei Klappen gegenphasig angebracht sind,
umfasst.

13. Ofen nach einem der zwei vorhergehenden Ansprüche, **dadurch gekennzeichnet, dass** in dem Raum (46), der von Decke und Zwischendecke umschlossen wird, das erste (74) und das zweite Beheizungsmittel (102) angebracht sind, die auf beiden Seiten des Gebläses angeordnet sind.

14. Ofen nach dem vorhergehenden Anspruch, **dadurch gekennzeichnet, dass** die Beheizungsmittel Gasbeheizungsmittel und/oder Mittel zum Beheizen durch die Zufuhr von elektrischem Strom umfassen.

15. Ofen nach einem der vorhergehenden Ansprüche, **dadurch gekennzeichnet, dass** die Wände der Hülle und die Tür innen mit einer Schicht aus wärmeisolierendem Material überzogen sind.

16. Ofen nach einem der vorhergehenden Ansprüche, **dadurch gekennzeichnet, dass** er eine Entlüftung zum Abkühlen der Hülle umfasst.

17. Ofen nach einem der vorhergehenden Ansprüche, **dadurch gekennzeichnet, dass** mehrere Ofenabschnitte nebeneinander angeordnet werden können, nämlich ein hinterer Abschnitt mit Rückwand und ohne Tür, ein vorderer Abschnitt mit einer Tür und ohne Rückwand und Zwischenabschnitte ohne Rückwand und Tür.

18. Verwendung des Ofens nach einem der vorhergehenden Ansprüche zum Feststellen und zur Zerstörung von Nickelsulfideinschlüsse enthaltenden Glasscheiben.

## Claims

1. Oven for the treatment of glass panes (60), the said glass panes being placed approximately vertically on support means (62) and spaced apart by a small distance, the said oven consisting of a parallelepipedal enclosure (12) thermally insulated from the outside and having, on one of its large lateral faces, an opening (36) through which a charge of glass panes (60) can be introduced, the said opening being hermetically sealed by a thermally insulating door (38), the enclosure being equipped with air blowing means (66) for making a flow of air circulate in the enclosure in a direction parallel to the plane of the glass panes, heating means (74, 102) for heating the said flow of air and homogenizing means (48, 50) for making the temperature uniform throughout the space occupied by the glass panes.

2. Oven for the treatment of glass panes (60), the said glass panes being placed approximately vertically on support means (62) and spaced apart by a small distance, the said oven consisting of a parallelepipedal enclosure (12) thermally insulated from the outside and having, on one of its lateral faces, an opening (36) through which a charge of glass panes (60) can be introduced, the said opening being hermetically sealed by a thermally insulating door (38) that can be moved into an open position in which it completely clears the opening (36), the enclosure being equipped with air blowing means (66) for making a flow of air circulate in the enclosure in a direction parallel to the plane of the glass panes, heating means (74, 102) for heating the said flow of air and homogenizing means (48, 50) for making the temperature uniform throughout the space occupied by the glass panes.

3. Oven according to Claim 1, **characterized in that** the thermally insulating door (38) can be moved into an open position in which it completely clears the opening (36).

4. Oven according to one of the preceding claims, **characterized in that** the air is blown between the glass panes in a horizontal direction.

5. Oven according to one of the preceding claims, **characterized in that** the said blowing means consist of a high-pressure fan (66).

6. Oven according to one of the preceding claims, **characterized in that** the enclosure comprises a floor (20) insulated from the ground, two side walls (22, 24), a large-area rear wall (26), a ceiling (28) and a front face of large area entirely open so as to provide the largest space for introducing the charge of glass panes.

7. Oven according to one of the preceding claims, **characterized in that** the blowing means (66) and the heating means (74, 102) are mounted in an upper chamber (46) that is located above a false ceiling (40) and communicates with two lateral chambers (56, 58) that are located on either side of the charge of glass panes (60), on the side facing the vertical edges of these panes.

8. Oven according to the preceding claim, **characterized in that** means are provided on either side of the zone occupied by the glass panes that are intended to introduce a large pressure drop in the path of the horizontal flow of air before it enters the said zone.

9. Oven according to the preceding claim, **characterized in that** the said means consist of two perforated plates (48, 50) placed vertically on either side of the charge of glass panes.

10. Oven according to one of the preceding claims, **characterized in that** the enclosure and the upper chamber (46) located above the false ceiling (40) have a width slightly greater than the width of the charge of glass panes and **in that** the fan has a diameter substantially equal to the internal width of the enclosure.

11. Oven according to one of the preceding claims, **characterized in that** it includes a device for making the flow of air blown by the fan circulate alternately in one direction and then in the other.

12. 'Oven according to the preceding claim, **characterized in that** the said device comprises:
- an annular plate (80) fitted around the intake orifice (70) of the fan parallel to the ceiling and to the false ceiling (40); and
- two right-angled flaps (76, 78) mounted so as to pivot, at their right angle, about horizontal spindles (86, 88) fixed in the upper chamber (46) on either side of the fan close to the edges of the annular plate, the said flaps being able to be rotated from a position in which one of their arms cooperates with the annular plate, in order to close off the passage for the air from the fan, while the other arm exposes the intake opening (70) of the fan, and vice versa, the two flaps being mounted in phase opposition.

13. Oven according to either of the two preceding claims, **characterized in that** first heating means (74) and second heating means (102) are placed, on either side of the fan, in the space (46) lying between the ceiling and the false ceiling.

14. Oven according to the preceding claim, **characterized in that** the said heating means comprise gas-fired heating means and/or heating means powered by electricity.

15. Oven according to one of the preceding claims, **characterized in that** the walls of the enclosure and the door are internally lined with a layer of thermally insulating material.

16. Oven according to one of the preceding claims, **characterized in that** it includes an air inlet for cooling the enclosure.

17. Oven according to one of the preceding claims, **characterized in that** several rows of enclosures may be juxtaposed, namely a rear row, with a rear wall and no door, a front row, with a door and no rear wall, and intermediate rows with no rear wall nor door.

18. Application of the oven according to any one of the preceding claims for the detection and destruction of glazing containing nickel sulphide inclusions.
